# EUROPEAN PATENT APPLICATION

(11) **EP 2 590 069 A1**
(43) Date of publication of application: **08.05.2013**
(21) Application number: 10853936.2
(22) Date of filing: 14.09.2010
(51) Int. Cl.: G06F 9/44

(54) **USER CUSTOMIZATION METHOD AND SYSTEM**

(30) Priority: 30.06.2010 CN 201010220062
(71) Applicant: ZTE Corporation, Shenzhen, Guangdong 518057 (CN)
(72) Inventor: LI, Tao, Shenzhen, Guangdong 518057 (CN)
(74) Representative: Vogel, Andreas
(86) International application number: PCT/CN2010/076863
(87) International publication number: WO 2012/000233

(57) **Abstract**

The disclosure discloses a user customization method and system. The user customization system comprises a customization environment module and a customization execution module, wherein the customization environment module comprises: a visual interface, configured to provide a visual editing interface of a terminal software and accept a customization demand for the configuration of the terminal software from a user; a demand model module, configured to generate attribute information of a terminal software control corresponding to the customization demand; a command analysis module, configured to generate scripted data corresponding to the attribute information; a communication module, configured to send the scripted data to the customization execution module; and the customization execution module, configured to receive and analyze the scripted data to obtain a call instruction of the terminal software, and to execute customization operation for the terminal software according to the call instruction of the terminal software. By adopting the solution of the disclosure, the personalized demands of different users can be satisfied, and the research and development pressure of manufacturers can be reduced.

## Description

### Field of the Invention

The disclosure relates to the field of communication, and in particular to a user customization method and system.

### Background of the Invention

At present, with the progress of technology and the continuous development of informatization, terminal software has become an indispensable tool in people's lives. In the communication field, equipment manufacturers provide the terminal software (such as the terminal software with a graphical display interface) while producing the manufacturing equipment (such as mobile phones, data cards, gateways and the like) for users. Because of the regional and cultural differences, different users have different customization demands for the terminal software. For example: for the same batch of terminal software, different users may have different perceptions and awareness for interface of the terminal software, and may have different perceptions and awareness for function combination and matching of the terminal software. The users expect to add some elements which belong to themselves to the interfaces of the terminal software, for example: some pictures which the users prefer can be replaced in the interface, and descriptions for some interface languages are expected to be customized by the users; or the users expect to adjust functions of the conventional software, for example: some functions are expected to be opened or closed, and the like.

As the users have quite different demands, researchers of the terminal software can hardly satisfy the demands of all users one by one in one set of software. And presently, the normal operation method comprises that: the manufacturers provide multiple sets of terminal software for the users to select; the manufacturers provide some configuration files for the users to modify; and the manufacturers issue some specific terminal software editions according to different user classifications and aiming at different user groups.

However, by adopting the development mode of the terminal software in the conventional art, when a great number of user demands are generated, the research and development capacity of the manufacturers may become a bottleneck; although the adjustment for the interfaces of the terminal software is not difficult, a lot of labour power for the research can be wasted. In addition, it is hardly to adapt to the personalized demands of the different users adopting the development mode of the terminal software in the conventional art.

### Summary of the Invention

The disclosure provides a user customization method and system, in order to at least solve the problem that the development mode of the terminal software cannot satisfy the personalized demands of the different users.

According to one aspect of the disclosure, a user customization system is provided, comprising a customization environment module and a customization execution module, wherein the customization environment module comprises: a visual interface, configured to provide a visual editing interface of a terminal software and accept a customization demand for configuring the terminal software from a user; a demand model module, configured to generate attribute information of a terminal software control corresponding to the customization demand; a command analysis module, configured to generate scripted data corresponding to the attribute information; a communication module, configured to send the script data to the customization execution module; and the customization execution module configured to receive the scripted data and analyze the scripted data to obtain a call instruction of the terminal software, and to execute customization operation for the terminal software according to the call instruction of the terminal software.

According to another aspect of the disclosure, a user customization method is provided, comprising: a visual interface providing a visual editing interface of a terminal software, and accepting a customization demand for configuring the terminal software from a user; a demand model module generating attribute information of a terminal software control which is corresponding to the customization demand; a command analysis module generating scripted data which is corresponding to the attribute information; a communication module sending the scripted data to a customization execution module; and the customization execution module receiving and analyzing the scripted data to obtain a call instruction of the terminal software, and executing customization operation for the terminal software according to the call instruction of the terminal software.

The user customization method and system provided by the disclosure provide a visual customization environment for the users, and make the users execute the customization operations for the terminal software on the visual interface, customize the terminal software, so as to obtain the terminal software which can satisfy the own demands via simple operations; thus, the personalized demands of the different users can be satisfied, and the research and development pressure of the manufacturers can be reduced.

### Brief Description of the Drawings

The drawings described below are used for providing the further descriptions for the disclosure, and forming a part of the application; the schematic embodiments of the disclosure and the descriptions thereof are used for explaining the disclosure, without improperly limiting the disclosure. In the drawings:
Fig. 1 shows a system block diagram of the user customization system according to the embodiment of the disclosure;
Fig. 2 shows a system block diagram of the user customization system according to the preferred embodiment of the disclosure;
Fig. 3 shows a work flowchart of a customization execution module of the user customization system according to the preferred embodiment of the disclosure;
Fig. 4 shows a work flowchart of a communication module and a command analysis module of the user customization system according to the preferred embodiment of the disclosure;
Fig. 5 shows a work flowchart of a demand model module of the user customization system according to the preferred embodiment of the disclosure;
Fig. 6 shows a flowchart of the user customization method according to the embodiment of the disclosure; and
Fig. 7 shows a flowchart of the user customization method according to the preferred embodiment of the disclosure.

### Detailed Description of the Embodiments

The disclosure is described in details with reference to the drawings and embodiments below. It should note that, the embodiments in the application and the characters in the embodiments can be mutually combined without conflict.

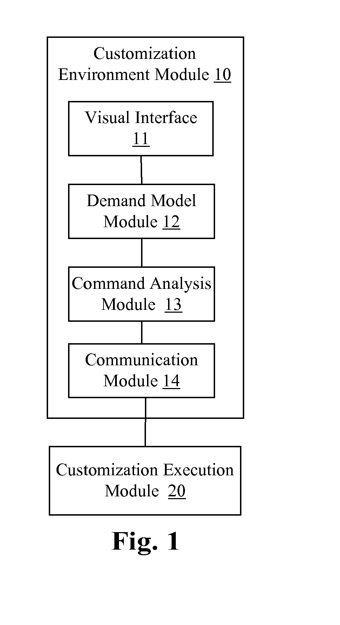

Fig. 1 shows a system block diagram of the user customization system according to the embodiment of the disclosure, comprising a customization environment module 10 and a customization execution module 20, wherein the customization environment module 10 comprises: a visual interface 11, configured to provide a visual editing interface of a terminal software and accept a customization demand for the configuration of the terminal software from a user; a demand model module 12, configured to generate attribute information of a terminal software control corresponding to the customization demand; a command analysis module 13, configured to generate scripted data corresponding to the attribute information; and a communication module 14, configured to send the scripted data to the customization execution module; and the customization execution module 20, configured to receive and analyze the scripted data to obtain a call instruction of the terminal software, and to execute customization operation for the terminal software according to the call instruction of the terminal software.

In the embodiment, the demand model module 12 is configured to generate the attribute information of the terminal software control which is corresponding to the customization demand; and the demand model module 12 comprises the attribute information of the customization demands which can be selected by the users in the visual interface 11. The attribute information in the demand model module 12 can be visually displayed on the visual interface 11; the users can select the customization demands which are corresponding to the own requirements on the visual interface 11, so as to adjust the related attribute information of the terminal software, for example, to adjust the size of the interface, the position of the control, to modify the background pictures of the control, and to modify the languages and fonts displayed on the interfaces, and the like, and to customize the terminal software which satisfies the own demands.

In the embodiment, the customization execution module 20 and the terminal software are requested to locate on a same equipment, but the customization environment module 10 can be arranged on the same equipment with the customization execution module 20, or on other equipment, such as a personal computer, random terminal equipment and the like.

The attribute information of the customization demand which can be selected by the users and contained in the demand model module 12 comprises: the attribute information for the modification item of the terminal software interface by the user, such as the type and name of the interface control, the size and position of the interface control, the types of the interface patterns, pictures and the like; the attribute information of the related content of the software interface language, such as interface languages, language fonts, font-weight, sizes, colours and the like; the attribute information of the customization contents related to the installation package, such as the names and icons of desktop shortcut of the terminal software, the icons of the system tray, and the names and icons of disc mirror if there is disc mirror, and the like; and the attribute information of the related customization content of the function items of the terminal software, such as the editing items of related configuration files, modification items of the function switch, and the like.

Preferably, the customization environment module 10 further comprises: a resource operation module, configured to generate a resource file which is corresponding to an operation result and can be identified by the terminal software according to the operation result of the customization operation. When the terminal software executes the customization operation according to the call instruction of the terminal software, the customization demand selected by the user on the visual interface 11 is directly shown in the terminal software on one hand, and is shown in the resource operation module on the other hand. The resource operation module not only comprises all the customization resources finally confirmed by the users in the customization environment module 10 of the terminal software, such as pictures, texts, configuration files and other adopted configuration files and the like, but also respectively saves the resource files into different folders in the mode of classification, such as the language folder, the picture folder, the configuration file folder and the like. When the users execute the customization operation in the customization environment module 10, the resource operation module can process and save the customization demands which are finally selected by the users according to the operation result, and immediately save the different resource files in different folders, generate the resource files which are corresponding to the operation results and can be identified by the terminal software, make the terminal software which is customized via the user customization system be operated according to the difference and personalization demands of the users, so as to realize the personalized configuration for the terminal software.

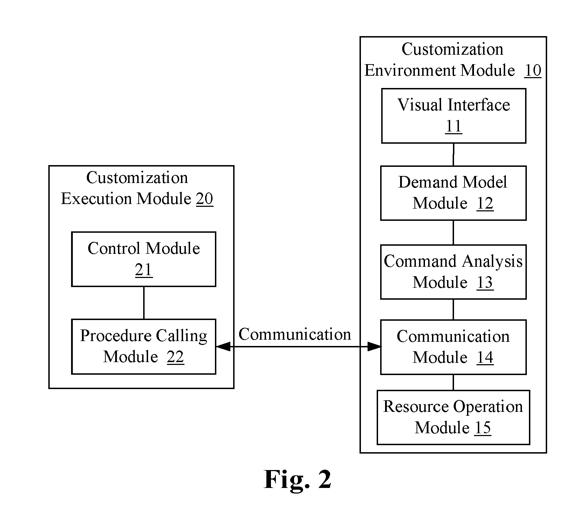

Fig. 2 shows a system block diagram of the user customization system according to the preferred embodiment of the disclosure. The user customization system in the embodiment comprises the customization environment module 10 and the customization execution module 20, wherein the customization environment module 10 comprises the visual interface 11, the demand model module 12, the command analysis module 13, and the command analysis module 13 is configured to generate the scripted data which is corresponding to the attribute information; the communication module 14 and the resource operation module 15; and the customization execution module 20 comprises the control module 21 and the procedure calling module 22.

The customization execution module 20 comprises: the procedure calling module 22, configured to receive and analyze the scripted data to obtain the call instruction of the terminal software; and the control module 21, configured to receive the call instruction, and control the terminal software to execute the customization operation according to the call instruction of the terminal software. The communication module 14 sends the scripted data to the procedure calling module 22 in the customization execution module 20, analyzes the scripted data to obtain the call instruction that can be called by the terminal software, and sends the call instruction to the control module 21; after receiving the call instruction, the control module 21 executes corresponding customization operations for the terminal software according to the content of the call instruction, for example, adjust the patterns of the terminal interfaces, modify the size of the terminal software interfaces, and the like, so as to execute the personalized configuration operation for the terminal software according to the user demands. In addition, after the control module 21 executes the corresponding customization operations for the terminal software according to the content of the call instruction, the execution result of the customization operation can be converted to the scripted data again via the procedure calling module 22 to execute communication transfer, and then be sent to the customization environment module 10, so as to make the resource operation module 15 preview the execution result of the customization operation, and generate the resource files which are corresponding to the operation result and can be identified by the terminal software.

The customization environment module 10 and the customization execution module 20 execute the communication via the communication module 14, analyze and execute the communication command via the command analysis module 13; the customization environment module 10 accepts the customization demands input by the users via the visual interface 11, and acquires the attribute information via the demand model module 12; and the resource operation module 15 processes the final customization result; thus, the terminal software which is customized by the user customization system can be operated according to the different and personalized customization demands of the users.

Preferably, the communication mode between the communication module 14 and the customization execution module 20 is the communication mode based on Internet Protocol (IP). The communication between two parties adopts the agreed communication script, only focusing on the formats of the script, but not the specific contents of the script. And the two parties of the communication, namely, the customization execution module 20 and the customization environment module 10 only define the basic script format of the communication, and the specific meaning for the script is realized by the customization execution module 20. For example: the communication module can be a Socket communication terminal based on the IP, and can execute the data communication with the customization execution module 20 in the mode of Client, send the scripted data to the customization execution module. Thus, the user customization interface and the customization execution module not only can exist on the same equipment and execute the communication in the local IP mode, but also can be respectively located on different equipment, and execute the communication via the unique IP address which is corresponding to the different equipment in the network.

Preferably, whether supporting to use the user customization system is judged by loading the configuration items, so as to make the manufacturers conveniently select whether to apply the user customization system on the products. When operating the terminal software, the equipment which installs the terminal software judges whether to support the communication with the customization environment module 10 by loading the configuration items, and determines whether to open the customization function, namely, judges whether to load the procedure calling module 22 by the control module 21. When the manufacturers do not open the user customization functions at the time of the equipment is delivered, the communication between the customization execution module 20 and the customization environment module 10 can be closed by closing the configuration items, so as to close the user customization function. Once the customization function of the terminal software is opened, it can default that the customization function for the terminal software operated by the terminal software customization device can be supported.

Preferably, the script language is the script language with the Extensible Markup Language (XML) format. The communication module 14 and the customization execution module 20 adopt the script language with XML format to execute interaction. The procedure calling module in the customization execution module 20 directly analyzes the script to be codes, for the control module in the customization execution module 20 to call and control the corresponding operations for operating the script language in the terminal software. As the script with the XML format only stipulates the head and the end of the communication script, without limiting the specific middle fields, the middle fields can be added or deleted according to the customization demands of the users. Additionally, as the scripted codes can be generated and executed in time, the communication or analysis executed by the scripted language can have higher real-time capacity.

The customization environment module 10 provided by the embodiment makes the users execute the customization operations for the terminal software on the visual interface, visually customize the terminal software, and execute the different and personalized customizations for the terminal software according to the own preference. The related customization command is sent to the terminal software by the customization execution module 20, the terminal software can directly respond after receiving the customization command, and display the customization result to the users; thus, the terminal software which can satisfy the own demands of the users can be obtained via simple operations, the personalized demands of different users can be satisfied, and the research and development pressure of the manufacturers can be reduced.

In the embodiment, the effect of each module has been described in the preceding embodiment, and is not described in detail any more.

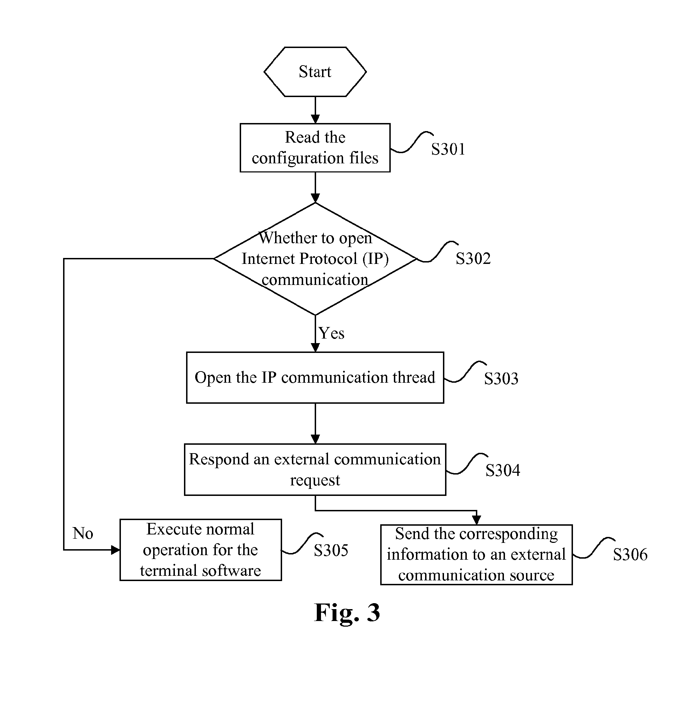

Fig. 3 shows a work flowchart of a customization execution module of the user customization system according to the preferred embodiment of the disclosure. As shown in Fig. 3, it comprises the following steps.

Step S301, the configuration files are read, namely, the configuration items of the terminal software are read when the terminal software is delivered, and it is judged whether the equipment where the terminal software is located on has the customization function by loading the configuration items.

Step S302, it is judged whether to open the IP communication, namely, it is judged whether to load the procedure calling module, so as to realize the communication with the customization environment module 10. If it judges that the procedure calling module needs to be loaded, implement Step S303. If not, implement Step S305.

Step S303, the IP communication thread is opened, namely, the procedure calling module is loaded, and the communication is monitored in the mode of Server. Once the communication demand from the customization environment module 10 is monitored, implement Step S304 to respond.

Step S304, an external communication request is responded, namely, the scripted data sent by the customization environment module 10 is received, the scripted data is analyzed to obtain the call instruction of the terminal software, and the terminal software is controlled to execute the customization operation according to the call instruction of the terminal software. And the related execution result can be converted to the communication script again via the procedure calling module, so as to be delivered back to the customization environment module.

Step S305, normal operation for the terminal software is executed. The control module not only takes charge of controlling the terminal software to execute the customization operation according to the call instruction, but also takes charge of processing and executing all the service requests of the terminal software; when not opening the IP communication, the control module executes the normal operation according to the service request of the terminal software. The specific normal operations have been mostly described, and are not described in details any more.

Step S306, the corresponding information is sent to an external communication source, namely, the execution result of the terminal software is sent to the customization environment module 10.

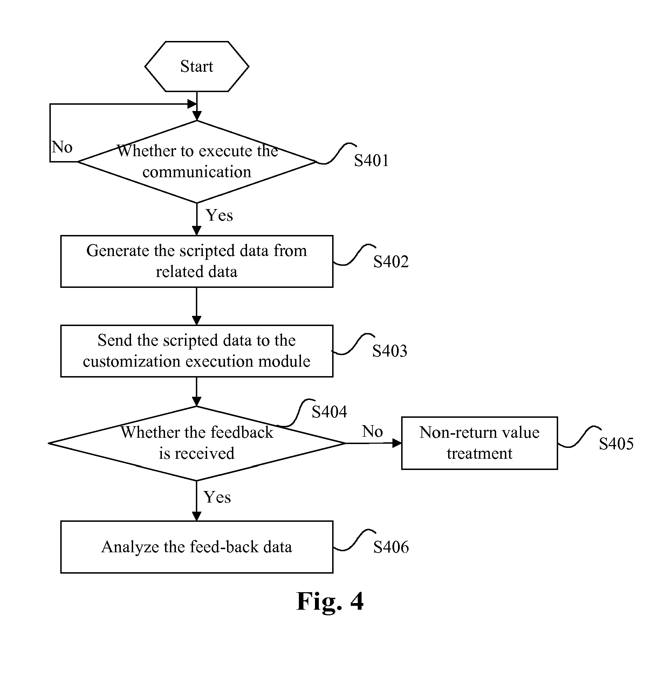

Fig. 4 shows a work flowchart of a communication module and a command analysis module of the user customization system according to the preferred embodiment of the disclosure. As shown in Fig. 4, it comprises the following steps.

Step S401,it is judged whether to execute the communication. Namely, after the user adopts the customization system, the customization environment module 10 selects whether to initiate the commutation to the customization execution module 20; and if the communication needs to be executed, implement Step S402. The communication established between the customization environment module 10 and the customization execution module 20 is based on the IP. So the customization environment module 10 and the customization execution module 20 not only can execute the communication via the local IP, but also can execute the communication via the unique IP address corresponding to different equipment in the network.

Step S402, the related data is made to generate the scripted data. Namely, after the user determines the customization demands on the visual interface, the command analysis module 13 analyzes the attribute information of the control generated by the demand model module 12 to generate the scripted data. The scripted data in the embodiment is an XML scripted data, and the script is delivered among the communication components according to the format which is agreed by the two parties.

Step S403, the scripted data is sent to the customization execution module 20. Namely, the communication module 14 sends the communication command script which is generated in the Step S402 to the terminal software, and the terminal software can analyze and process the communication command script.

Step S404, it is judged whether the feedback is received. Namely, the customization environment module 10 judges whether the customization execution module has feed-back communication, if no communication is feedback, implement Step S405, otherwise, implement Step S406.

Step S405, treatment is processed for non-return value. If the scripted data sent by the communication module 14 has the return value, when not receiving the data which is returned by the customization execution module 20, the communication module 14 notifies other modules in the customization environment module 10 to process according to the sent specific content of the command script, and to prompt the users or resend the command.

Step S406, the feed-back data is analyzed. After receiving the feedback data of the communication command, the communication module 14 sends the feedback data to the command analysis module 13, the command analysis module 13 analyzes the communication script to the specific data; and the data can become the available data source of other following components, such as the visual demand model component, the interface display and interaction component and the like.

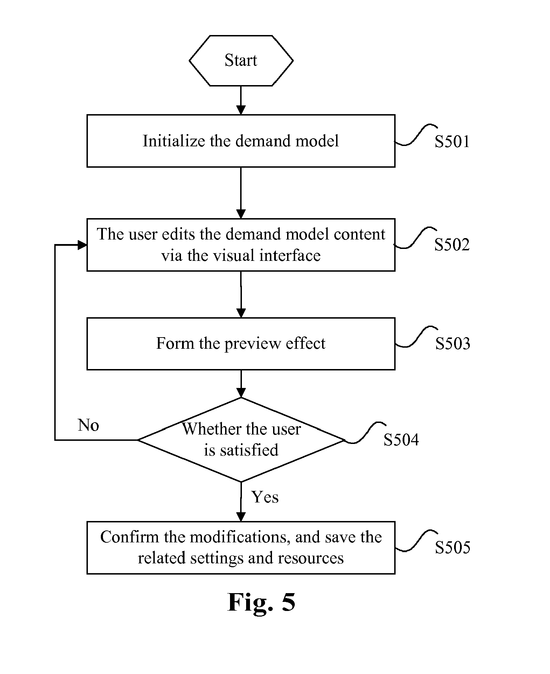

Fig. 5 shows a work flowchart of a demand model module of the user customization system according to the preferred embodiment of the disclosure. As shown in Fig. 5, it comprises the following steps.

Step S501, when the user customizes the terminal software, the demand model module 12 firstly initializes the contained attribute information of the user demand model, so as to provide a selectable range for the user and update the attribute information. And the contents corresponding to the attribute information of the user demand model are generally stored in the equipment where the terminal software is located in.

The attribute information contained by the user demand model comprises, but is not limited by the following aspects.
1) Customization for the interface of the terminal software: wherein it comprises the information such as the size of the interface, the position, the background pictures of the control (supporting multiple pictures), the languages displayed on the interface, fonts of the languages, size, font-weight, colors and the like, and the animation and sound contained by the interface, and the like.
2) Customization for the function items of the terminal software: wherein it comprises the configuration files adopted by the terminal software, function switch files and some other adopted files.
3) Customization for the installation package of the terminal software, wherein it comprises the icons and names of the installation package of the terminal software, the names and icons of the disc mirror, the names and icons of system tray, the languages of the installation package and the like.
4) The visual editing unit of the user demand model based on the above-mentioned customization items, comprising one set of the graphical interface used for containing customization contents of all the user demand models, and the interaction information.
5) The preview unit of the user demand model based on the visual customization items, comprising previewing the functions of related editing units (such as pictures, words, configuration files and the like). In the visual editing unit of the user demand, after editing the user demand model, the editing effect can be viewed via the preview unit.

Step S502, the user edits the content of the demand model via the visual interface. Namely, after completely initializing the user demand model, the content displayed in the visual interface 11 establishes relation with the attribute information in the demand model; and the user can select corresponding model content according to the own customization demands on the visual interface; the demand model module 12 generates the corresponding attribute information according to the customization demands of the users, namely, the model content selected by the user on the visual interface, so as to provide the personalized user customization for the users.

Step S503, the preview effect is formed. When the user expects to view the customization effect for the terminal software, the user can preview. And now, the customization execution module 20 can receive the preview instruction which is sent by the customization environment module 10, process and display the customization contents of the user; thus the user can directly view the customization effect. And synchronously, the user can see the related customization content on the visual interface 11, such as the pictures selected by the user, the changed words, and the related configuration files and the like. In the step, the execution step of the customization execution module 20 is shown in Fig. 3.

Step S504, it is judged whether the user is satisfied. The user can directly see the customization result via the terminal software; if the user is not satisfied and expects to execute the re-customization, implement Step S502 to make the user execute the re-customization operation, and otherwise, implement Step S505.

Step S505, the modification is confirmed, the related settings and resources are saved. Namely, after the user confirms to adopt the current customization result, the resource operation module 15 generates the resource files which can be identified by the terminal software, and makes the resource files be replaced to the corresponding position of the terminal software, so as to make the terminal software operate in the mode of user customization.

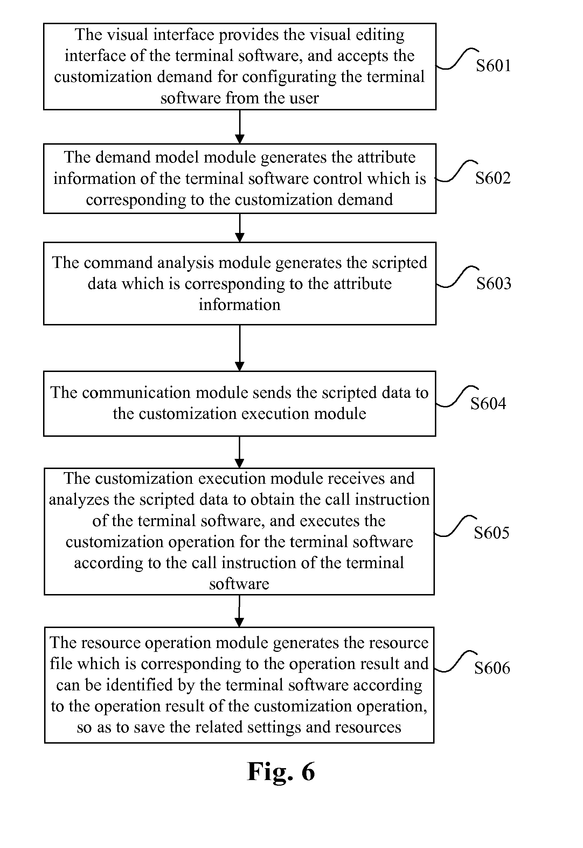

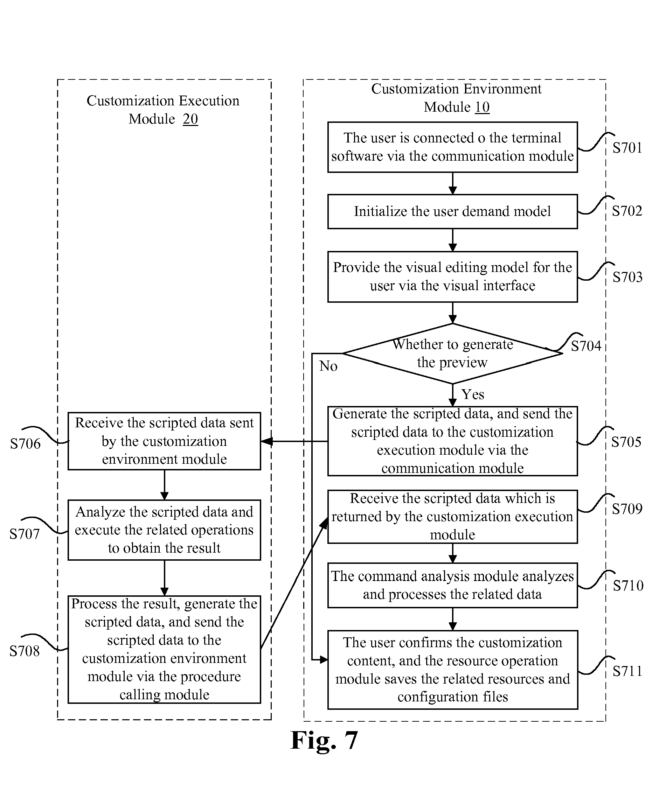

The user customization method of the disclosure is described in details below with reference to Fig. 6 and Fig. 7.

Fig. 6 shows a flowchart of a user customization method according to the embodiment of the disclosure, comprising the following steps.

Step S601, the visual interface provides the visual editing interface of the terminal software, and accepts the customization demands of the users for configuring the terminal software;

Step S602, the demand model module generates the attribute information of the terminal software control which is corresponding to the terminal software;

Step S603, the command analysis module generates the scripted data which is corresponding to the attribute information;

Step S604, the communication module sends the scripted data to the customization execution module;

Step S605, the customization execution module receives and analyzes the scripted data to obtain the call instruction of the terminal software, and to execute the customization operation for the terminal software according to the call instruction of the terminal software.

The embodiment provides a visual customization environment module for the users, and makes the users execute the customization operations for the terminal software on the visual interface, and customize the terminal software, so as to obtain the terminal software which satisfies the own demands via simple operations; thus, the personalized demands of different users can be satisfied, and the research and development pressure of the manufacturers can be reduced.

The specific user customization method has been described in details in the user customization system, and is not repeated here.

Preferably, the user customization method further comprises the following steps.

Step S606, the resource operation module generates the resource file which is corresponding to the operation result and can be identified by the terminal software according to the operation result of the customization operation, so as to save the related settings and resources.

Preferably, the user customization method further comprises that: preview the customization operation result when the terminal software executes the customization operations.

Generally, after selecting the attribute information corresponding to the own customization demands on the visual interface 11, the users are quite desired to see the adjustment effect for the terminal software operated by themselves. The terminal software customization device provides a set of preview mechanism, capable of allowing the terminal software to immediately respond the modifications for the terminal software which are operated by the users in the terminal software customization device. The users can directly see the own customization result, and if there is any necessary modification, the operation can be repeated until the users are satisfied. And now, the terminal software which is customized by the users according to the user customization method can comprise the own different and personalized demands of the users.

Specifically, when the users are desired to see the customization effect for the terminal software, the customization execution module 20 can receive the preview command sent by the customization environment module 10, and when the user customization system completes the Step S604 in Fig. 6, the customization execution module 20 controls the terminal software to display the customization content of the users. Synchronously returns the scripted data which is corresponding to the operation result, and makes the users see the related representation of the operation result on the visual interface 11, such as the pictures selected by the users, the changed words, and the related configuration files and the like. The execution steps of the customization execution module 20 in the embodiment are shown in Fig. 3.

Preferably, the user customization method further comprises that:
before accepting the customization demands for configuring the terminal software from the user, initialization is executed for the user demand model in the user demand model module, so as to provide the selection range of the customization demand for the user. And the specific initialization method is shown in Fig. 5.

Fig. 7 shows a flowchart of the user customization method according to the preferred embodiment of the disclosure. As shown in Fig. 7, it comprises the following steps.

Step S701, the user is connected to the terminal software via the communication module 14, namely, the customization environment module 10 initiates the communication connection to the customization execution module 20.

Step S702, the user demand model is initialized. Before accepting the customization demands for configuring the terminal software from the user, initialization is executed for the user demand model in the user demand model module 12, so as to provide the selection range of the customization demand for the user. And the specific initialization method is shown in Fig. 5.

Step S703, the visual editing model for the user is provided via the visual interface 11. Namely, the attribute information in the demand model module 12 is displayed on the visual interface 11, the specific method has been mostly described in the conventional art, and is not repeated here. The contents displayed by the visual interface 11 comprise all the contents of the user customization demand model, and are provided for the user to edit. The user executes the personalized customization for the user demand model in the mode of real-time editing, and the related customization contents can be displayed via the visual demand model component.

Step S704, it is judged whether to generate preview. If yes, implement Step S705, if not, implement Step S711. The user judges whether to preview the customization content according to the own preference, if the user prefers to preview the customization effect operated by the terminal software customization device, the user adopts the preview function and implements Step S705; otherwise, if the user considers that it is unnecessary to preview the customization content, for example, the user has been quite familiar with the customization effect of some customization items, and prefers to save the preview stage, the user directly implements Step S711.

Step S705, the scripted data is generated, and the scripted data is sent to the customization execution module via the communication module. the editing contents of users are collected in the visual demand model, the customization demand is formed, and the related contents of the attribute information of the terminal software control which is corresponding to the customization demand are converted to the communication scripted data by the command analysis module 13, and the scripted data is sent to the customization execution module via the communication module 14.

Step S706, the scripted data sent by the customization environment module is received.

Step S707, the scripted data is analyzed, the related operations are executed and the result is obtained. The procedure calling module 21 on the terminal software side analyzes the scripted data, generates the command call which can be operated by each service component of the terminal software; and controls each service component of the terminal software to execute the command call by the control module 22, and to obtain the feedback of the related operation result at the same time.

Step S708, the result is processed to generate the scripted data, the scripted data is sent to the customization environment module via the procedure calling module, so as to display the operation result in the customization environment module.

Step S709, the scripted data which contains the operation result of the terminal software is received.

Step S71 0, the related data is analyzed and processed by the command analysis module. The command analysis module analyzes the scripted data which contains the operation result of the terminal software, and makes the visual interface display the returned data, so as to make the user edit and view.

Step S711, the user confirms the customization content, the resource operation module saves the related settings and configuration files. When the user confirms the related customization operation, the resource operation module can finally confirm and save the customization operations of the user. After executing the operation for the related configuration items such as pictures, words, videos, sounds, files and the like, the resource operation module generates the resource files which can be identified by the terminal software, and makes the files be replaced on the corresponding positions of the terminal software, so as to make the terminal software be operated in the mode of user customization.

From the above descriptions, the user customization method and system in the above embodiment not only can be applied to the terminal software, but also can be applied to other related devices, such as the remote terminal software customization method and device, and the terminal software diagnosis method and device; and synchronously can be applied to production and construction of the terminal software products, and other solutions and devices which adopt this solution and system.

From the above descriptions, the user customization method and system provided by the embodiment of the disclosure can make the user conveniently adjust the interface of the terminal software, such as the interface size, shape, background pictures, interface languages, font size, colors and the like, and can adjust the functions of the terminal software; the terminal software which satisfies the user demand can be customized via simple operations; thus, the research and development pressure of the manufacturers can be reduced, and the personalized demands of different users can be satisfied as well.

Obviously, those skilled in the art should know that each of the modules or steps of the disclosure can be realized by universal computing devices; the modules or steps can be concentrated on a single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different sequences, or can be independently manufactured as each integrated circuit module, or multiple modules or steps thereof can be manufactured to be single integrated circuit module, so as to be realized. Thus, the disclosure cannot be limited by any combination of the specific hardware and software.

## Claims

1. A user customization system, **characterized by** comprising a customization environment module and a customization execution module, wherein
the customization environment module comprises:
a visual interface, configured to provide a visual editing interface of a terminal software and accept a customization demand for configuring the terminal software from a user;
a demand model module, configured to generate attribute information of a terminal software control corresponding to the customization demand;
a command analysis module, configured to generate scripted data corresponding to the attribute information;
a communication module, configured to send the scripted data to the customization execution module; and
the customization execution module, configured to receive and analyze the scripted data to obtain a call instruction of the terminal software, and to execute customization operation for the terminal software according to the call instruction of the terminal software.

2. The user customization system according to claim 1, **characterized in that** the customization environment module further comprises: a resource operation module, configured to generate a resource file which is corresponding to an operation result and can be identified by the terminal software according to the operation result of the customization operation.

3. The user customization system according to claim 1 or 2, **characterized in that** the customization execution module comprises:
a procedure calling module, configured to receive and analyze the scripted data to obtain the call instruction of the terminal software; and
a control module, configured to receive the call instruction, and control the terminal software to execute the customization operation according to the call instruction of the terminal software.

4. The user customization system according to claim 3, **characterized in that** a communication mode between the communication module and the customization execution module is a communication mode based on an Internet Protocol (IP).

5. The user customization system according to claim 4, **characterized in that** when the terminal software is in operation, a configuration item is loaded to judge whether the terminal software supports to use the user customization system.

6. The user customization system according to claim 5, **characterized in that** a script language is the script language with an Extensible Markup Language (XML) format.

7. A user customization method, **characterized by** comprising:
a visual interface providing a visual editing interface of a terminal software, and accepting a customization demand for configuring the terminal software from a user;
a demand model module generating attribute information of a terminal software control which is corresponding to the customization demand;
a command analysis module generating scripted data which is corresponding to the attribute information;
a communication module sending the scripted data to a customization execution module; and
the customization execution module receiving and analyzing the scripted data to obtain a call instruction of the terminal software, and executing customization operation for the terminal software according to the call instruction of the terminal software.

8. The user customization method according to claim 7, **characterized in that** the user customization method further comprises: a resource operation module generating a resource file which is corresponding to an operation result and can be identified by the terminal software according to the operation result of the customization operation.

9. The user customization method according to claim 8, **characterized in that** the user customization method further comprises: previewing a customization operation result when the terminal software executes the customization operation.

10. The user customization method according to any one of claims 7 to 9, **characterized in that** the user customization method further comprises:
initializing user demand model in the demand model module before accepting the customization demand for the configuration of the terminal software from the user.
